# EUROPEAN PATENT SPECIFICATION

(11) **EP 0 823 762 B1**
(45) Date of publication and mention of the grant of the patent: **08.03.2000**
(21) Application number: 96112615.8
(22) Date of filing: 05.08.1996
(51) Int. Cl.: H02G 3/06

(54) **A corner joint for a cable duct**
Eckverbindung für einen Kabelkanal
Joint d'angle pour une canalisation de câble

(43) Date of publication of application: 11.02.1998
(73) Proprietor: LK A/S, DK-2750 Ballerup (DK)
(72) Inventor: Pedersen, Kurt Flemming Lindegaard, DK-3400 Hillerod (DK)
(74) Representative: Holme, Edvard

(56) References cited:
- US-A- 1 425 011
- US-A- 2 899 159
- US-A- 4 096 349

## Description

The invention concerns a corner joint for a cable duct, and which has a cross section in the shape of mainly an U and consists of a body and two flanges.

Cable ducts are used for supporting and hiding cables which are passed along the walls in a building, and also for mounting corresponding installations, as e.g. wall sockets or plug sockets. In most cases the ducts can be seen and efforts are therefore made to form them in a beautiful and attractive design.

A cable duct is normally built up of straight duct parts which are connected with corner joints at corners in the building. These corner joints are usually fixed components which typically are adapted to assemble the straight duct parts at a right angle in either an inner or outer building corner.

Building corners are, however, often deviating from a right angle, and at such corners it is therefore not possible to obtain a satisfactory connection between a fixed corner joint of 90° and two straight duct parts which between them will form another angle. The parts are no longer fitting together and that means, that there in dependence of the size of the deviations can arise larger or smaller openings at the locations where the straight canal ducts end up into the corner joint, just as the rear edges of the flanges will not be flush with the walls in the corner of the building. Thereby the general impression of the wanted design of the cable duct will be disfigured.

In order to remedy the above mentioned defects of the conventional fixed corner joints there has been developed flexible corner joints in form of accordion-like bellows which within wide limits can take shape after an angle of a given corner. A corner joint of this type is disclosed for example in US-A-4,096,349. Since these bellows have a totally different appearance than the rest of the cable duct they themselves will, however, disfigure the appearance of the total cable duct. To this can be added that some of the waves of the bellow is pushed together and others are drawn from each other at the common sharp corners where the original regular wave pattern is distorted to an irregular pattern with a fuzzy and plain look. At an inner corner, the bellow will furthermore describe an arc which leaves a rather large space between the walls of the corner and the rear edge of the bellow.

Another example of a corner joint is described in US-A-2,899,159, where two corner joint parts comprise a pair of hinge leaves connected together by a pivot pin.

The object of the invention is to provide a corner joint of the type mentioned in the opening paragraph which without a substantial change of the basic design easily can be adapted to fit satisfactorily for assembling straight cable parts in a corner with an angle within a pre-decided angle area.

Another purpose of the invention is to provide a corner joint of the type mentioned in the opening paragraph which in all of the possible angle positions has a design fitting to the design of the straight duct parts.

The new and unique according to the invention whereby this is obtained consists in that the corner joint comprises a segment of an annular solid of revolution which defines an axis parallel with the body and also comprises two corner joint parts which are arranged for pivotal movement around said axis both with respect to the segment (10) and with respect to each other. The two corner joint parts can thereby fit into a given corner and by mounting be brought to fit tightly and smoothly to the adjoining ends of the two duct parts at the same time as the rear edges of the flanges will be flush with the walls of the corner. The segment of the solid of revolution forms a transition between the bodies of the corner joint parts, which bodies will be more or less removed from each other in dependence of the angle of the corner.

In order to ensure that at said transition there will not arise openings which spoil the general impression of the design of the cable duct, the free edge, being closest to the segment, of the body of each corner joint part can be formed in such a way that it, when the corner joint part is swinging around the swivel axis, describes a face which is similar to the outside of the segment and surrounds this at a relatively small distance (not illustrated).

In order also to ensure that there will not arise openings at the transition between the two corner joint parts, the segment can have an adequately large arc of an angle to be able to close the largest space which can arise between the two bodies of the corner joint parts, and at the same time there can at each of the two side edges of the segment be formed an outside-turning projection to ensure that the segment continuously will be in a position in relation to the two bodies where it will be able to bridge the possible spaces between the bodies.

In a preferred embodiment, the mutual swinging function of the corner parts can be established by hinging the flanges together with hinges, each of which comprise two hinge-joints and a pivot with the same axis as the solid of revolution.

The hinge-joints can furthermore be formed as an integrated part of the respective flange whereby the construction will be especially simple.

Alternatively, the hinge joints can be separate parts which then are attached to the inside of the flanges in order not to disfigure the design by being visible on the upper side of the flanges.

Between the flanges there will at least in some of the possible mutually angle positions of the corner joints arise openings which could offend the general impression of the cable duct. In order also in these places to be able to obtain a smooth and even transition between the two parts there can be placed a disc coaxially with the solid of revolution, which disc is let into complementary incisions in the flanges with the outside flush with the outside of the flanges.

On the inside of each of these discs there can furthermore coaxially with the solid of revolution be formed an annular groove for slidingly to accommodate one of the ends of the segment so that the segment of the solid of revolution will be swinging around the same axis as the corner joint parts.

In order to make this function possible when the hinge joints are situated upon the inside of each disc there can furthermore be formed incisions in the hinge joints for allowing the segment to extend freely between the grooves.

The swivel axis can in principle be placed in any position in relation to the corner join. An especially expedient construction can, however, be obtained when the swivel axis is cutting each plane of the flange in a point between lines containing the two longitudinal edges of the respective flange.

The invention will be more fully explained below by the following description of embodiments, which just serve as examples, with reference to the drawing, where
Fig. 1 shows, seen in perspective, a corner joint which in an inner corner of a building is connecting two straight cable parts,
Fig. 2 shows fragmentarily in a larger scale the same, seen from above,
Fig. 3 shows fragmentarily in a larger scale a horizontal section through the corner joint shown in fig. 1,
Fig. 4 shows a section taken along the line lV - lV in fig. 3,
Fig. 5 shows, seen in perspective, a corner joint which in an outside corner of a building connects two straight cable parts,
Fig. 6 shows fragmentarily in a larger scale the same, seen from above,
Fig. 7 shows fragmentarily in a larger scale a horizontal section through the corner joint shown in fig. 5, and
Fig. 8 shows a fragment of a section taken along the line Vlll - Vlll in fig. 7.

In the following detailed description the expression "building corner" is used for an inside or outside corner in a building. For the corner joints which are used to connect straight cable parts in such a building corner the expression "corner" is used for the sake of convenience, which expression equally can be either an inner corner or a outer corner.

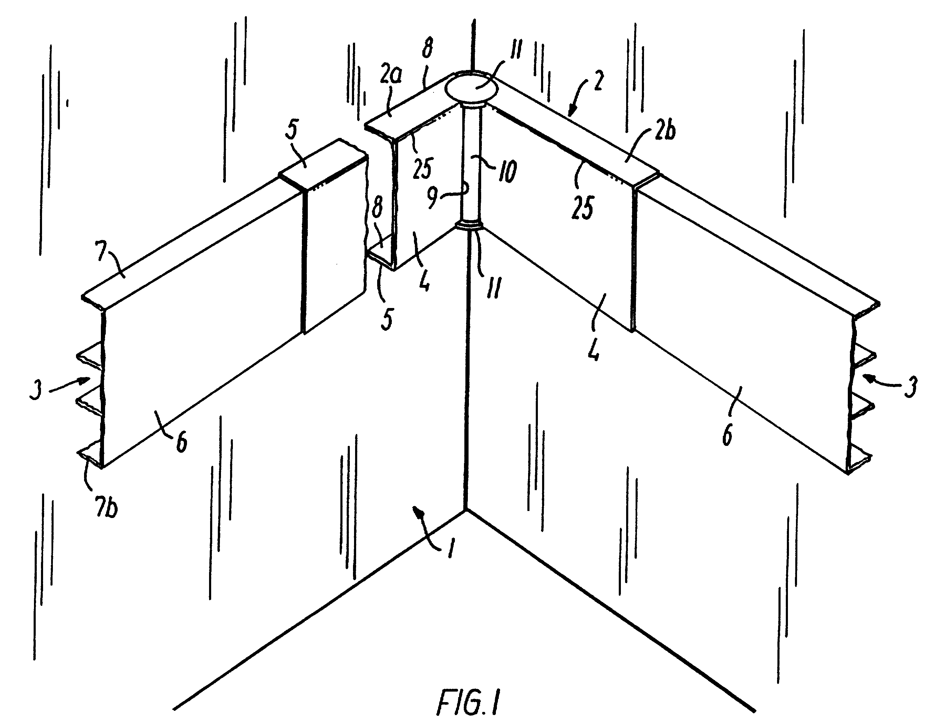

In fig. 1 is seen an inside building corner 1, where an inner corner 2 for a cable duct is used for assembling two straight cable parts 3. By the construction of a building the size of the angle of building corners are specified typically to 90°.

It has appeared, however, that there are in practise larger or smaller deviations from the size of the angle thus stipulated. When in these cases conventional fixed inner corners are used for assembling the cable duct the result will often be a poor fit with an unsightly appearance.

This disadvantage is remedied by means of the invention because the straight cable ducts can be assembled with the inner corner 2 within a pre-decided larger angle area which for example can be between 60° and 120° and with the same good fit in all cases.

This advantageous function is mainly obtained by building up the corner 2 of two inner corner parts 2a,b which are pivotally connected with each other and therefore can be adjusted to exactly that angle which fits to a certain building corner.

The parts 2a,b have each a main form which corresponds to the outside of the upper cable duct so that the parts as regard the appearance will appear as a natural continuation of the cable duct. In the case shown each part 2a,b has a cross section in the shape of an U and consists of a vertical body 4 and two horizontal flanges 5. The body 4 overlaps in mounted condition the front plate 6 of the cable duct, while the flanges 5 are overlapping the top plate and the bottom plate 7, respectively, of the cable duct. The rear edge 8 of the flanges are following the walls of the building corner.

The geometry of the construction implies that in most of the angle positions, in which the two parts 2a,b can be placed in relation to each other, there is created an opening between the two inner edges 9, turning towards each other, of the bodies 4. In deference to the general impression of the design this opening is filled by a segment 10 of an annular solid of revolution which in the case shown is a straight tube.

Discs 11 are let into the flanges for closing the openings which are formed in this area in most of the mutual angle positions between the two parts 2a,b, The discs are placed with the outside being flushed with the outside of the flanges such that the passage between the two parts will be even and smooth.

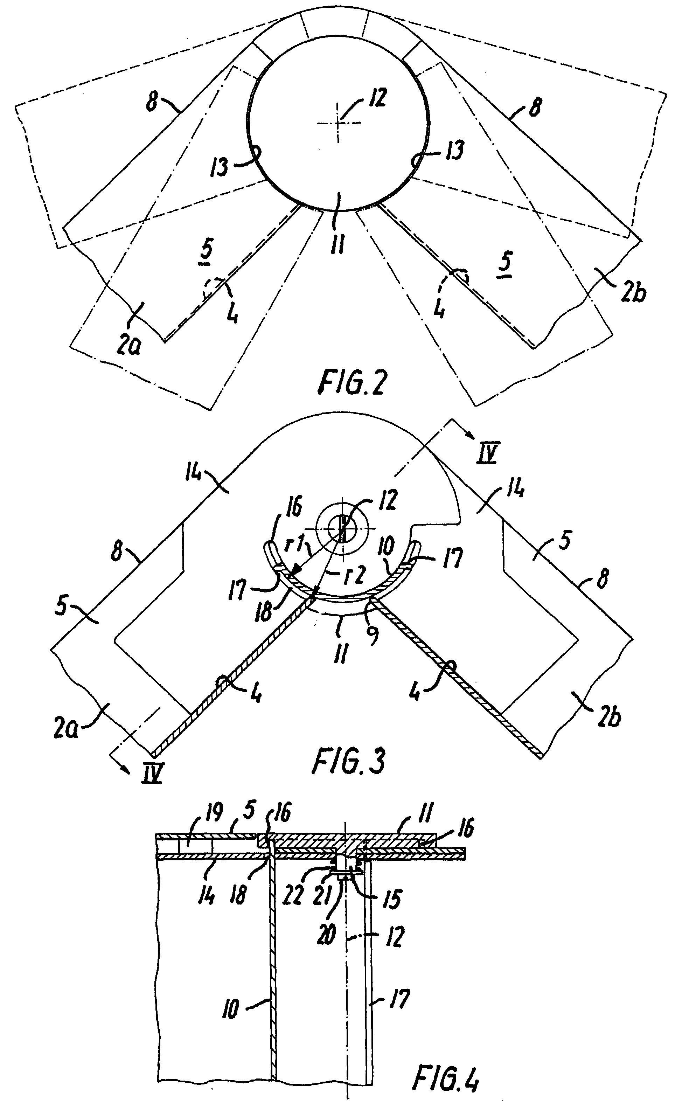

Fig. 2 shows in fragments the inner corner 2, seen from above. The axis of rotation 12 between the parts 2a,b is coinciding with the axis of the discs 11. In the flanges there are coaxially with the discs 11 formed complementary incisions 13 with only somewhat larger radius than the radius of the disc. The edges of the incisions will therefore follow the periphery of the disc 11 in close distance in all of the angle positions between the parts.

The typical angle position of 90° is shown in fig. 2 with a full-drawn line while the positions with angles which are larger or smaller than 90°, respectively, are shown with a dotted line.

Figs. 3 and 4 show more definite how the inner corner 2 is adapted. The two parts 2a,b are hinged together with hinges which consist of two hinge parts 14 and a swivel 15 which is coaxially attached to the inside of the disc 11.

It has to be noticed that the hinge parts also can be formed as integrated parts of the flanges themselves. In this case the incisions are replaced by depressions in the flanges with the same outline as the edges of the recesses such that the hinges will be offset under the disc. The variant is not shown in the drawing.

In each of the insides of the discs 11 there is formed a groove 16 which serves to slidingly accommodating one of the ends of the tube segment 10. Thereby the outside of the tube segment 10 will be situated in a cylinder surface with radius r1 and axis in common with the axis of revolution 12 of the parts 2a,b. When the parts are rotated in relation to each other their inner edges 9 will describe a cylinder surface which is similar to the cylinder surface of the tube segment. The radius r2 of the cylinder surface is only somewhat larger than r1 and the inner edges 9 of the bodies will therefore follow the outside of the tube segment at close distance in all of the angle position between the parts.

The tube segment has to span an arc of an angle which at least is just as large as the angle between the to inner edges in the largest angle position between the parts 2a,b. It is, however, for constructive reasons not expedient that the arc of angle of the segment becomes too big, and to ensure that the segment continuously can bridge the opening between the inner edges 9 there has therefore at each of the side edges of the segment been formed an outwards turning projection 17 to prevent, by stopping against the inside of the corresponding body, that the segment is rotating past the inner edge 9 of one of the bodies and is exposing an opening at this edge.

The hinges parts 14a,b, are, inter alia in deference to the appearance, placed upon the inside of the flanges and under the disc. In the hinge parts 14 there have therefore been made incisions 18 which allow the segment 10 to extend freely between the grooves 16 of the discs 11.

The hinge parts 14 are attached to the flanges 5 by means of screw connections (not shown) or in another expedient way with intermediate spacers 19. (See Fig. 4). Furthermore, the hinge parts are pivotally fixed on the tap 15 by means of a screw 20 and a disc 21 and also a pressure spring 22 to tighten the hinge parts 14 against the underside of the disc to ensure that the two parts 2a,b in every angle position can form a stiff and non-backlash connection with each other.

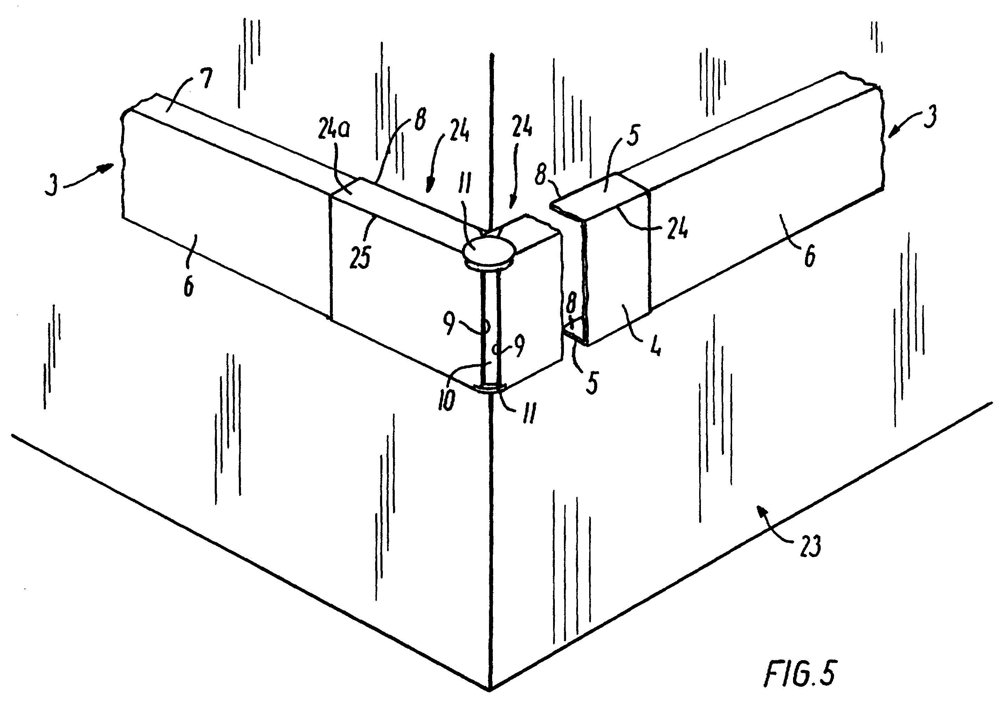

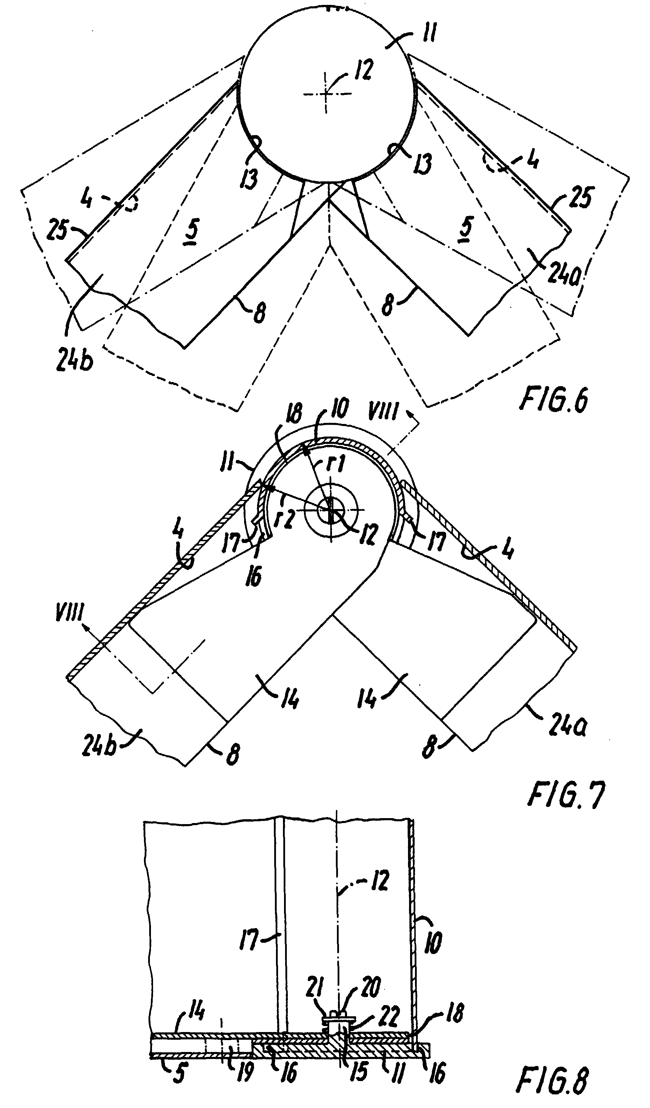

Fig. 5 - 8 show an outer building corner 23 where an outer corner 24 for a cable duct is used to assemble two straight cable duct parts 3.

The geometry of this outer corner 24 fits for an outer building corner, while the geometry of the inner corner 2 fits for an inner building corner, but otherwise the two corners are in principle adapted in the same way and similar parts are therefore designated with the same reference number. Since the two corners furthermore function in the same way and fulfil the same purpose they can, as regards the outer corner 24 shown in fig. 5 - 8, be referred to the above disclosed description of the inner corner 2 shown in fig. 1 - 4.

The common axis, around which the parts 2a,b and the tube segment 11 are rotating, cuts by the preferred embodiments for as well the inner corner 2 as the outer corner 24 the plane of the flanges in an area which are limited by the lines which contain the two longitudinal edges 8 and 25 of the flanges. As a result of the geometrical differences the distance of the intersection point from the line through the rear edges 8 of the flanges will typically be larger as regards the inner corner 2 than as regards the outer corner 24.

The invention is described above and shown in the drawing from the presumption that the front face 6 of the cable ducts was plane and parallel to the wall. For this construction a tube segment will in all angle positions fit efficiently in order to be able to fill out the opening between the inner edges of the bodies.

If the cable duct, however, has a diagonal front face, there will have to be used an annular truncated cone segment. If the front face is arched, there will correspondingly have to be used an annular solid of revolution with a generatrix which in the shape corresponds to the arched form of the front face.

The corner joint can also be used to assemble two cable duct parts which form an angle to a horizontal plane. In that case the inner edges of the bodies shall not be perpendicular to the flanges, as shown in fig. 1 and 5, but form an acute angle which corresponds to the angle which the cable duct forms with a horizontal plane.

## Claims

1. A corner joint (2) for a cable duct which has a generally U-shaped cross section and comprises a body (4), two flanges (5), a segment (10) of an annular solid of revolution which defines an axis (12) parallel with the body (4) and also two corner joint parts (2a,b), **characterized** in, that the two corner joint parts are arranged for pivotal movement around said axis both with respect to the segment (10) and with respect to each other.

2. A corner joint (2) according to claim 1, **characterized** in, that the free edge (9), being closest to the segment (10), of the body of each corner joint part (2a,b) can be formed in such a way that it, when the corner joint part (2a,b) is swinging around the swivel axis (12), describes a face which is similar to the outside of the segment (10) and surrounds this at a relatively small distance.

3. A corner joint (2) according to claim 1 or 2, **characterized** in, that the arc of the angle of the segment (10) is equal to or only a little larger than the maximum angle which two planes, containing the axis (12) and the free edge (9), being closest to the segment (10), of the body of each corner joint part (2a,b), can form with each other.

4. A Corner joint (2) according to claim 1, 2 or 3, **characterized** in, that at each of the two side edges of the segment (10) there is formed at least one projection (17) which extends radially outwards from the outside of the segment (10).

5. A Corner joint (2) according to each of the claims 1 - 4, **characterized** in, that the flanges (5) of the corner parts (2a,b) two and two are hinged together with hinges (14a,b), each of which comprising two hinge-joints and a hinge pivot with the same axis as the solid of revolution.

6. A corner joint (2) according to claim 5, **characterized** in, that each hinge part (14a,b) is formed as an integrated part of the respective flange (5).

7. A corner joint (2) according to claim 5, **characterized** in, that each hinge part (14a,b) is a separate part which is attached to the inside of the respective flange (5), and that each hinge pivot (15) coaxially is mounted on a disc (11) with at least the same diameter as the solid of revolution has at its corresponding end.

8. A corner joint (2) according to claim 7, **characterized** in, that there coaxially with the discs (11) are formed complementary incisions (13) in the flanges (5), and that the outside of the discs (11) are flushing with the outside of the flanges (5).

9. A corner joint (2) according to claim 7 or 8, **characterized** in, that each disc (11) has a larger diameter than the solid of revolution has at its corresponding end, and that there coaxially in the inside of the discs (11) is formed an annular groove (16) for slidingly to accommodate one of the ends of the segment (11).

10. A corner joint (2) according to claim 9, **characterized** in that in the hinge parts (14a,b) there are formed incisions (18) for allowing the segment (10) to extend freely between the annular grooves (16) of the two discs (11) in mainly all of the angle positions which the two corner joint parts (2a,b) can be placed in relation to each other.

11. A corner joint (2) according to each of the claims 1 - 10, **characterized** in, that the axis (12) cuts the plane of each flange (5) in a point between lines containing the two longitudinal edges (8) of the respective flange (5).

## Patentansprüche

1. Eckverbindung (2) für eine Kabelführung, welche einen im wesentlichen U-förmigen Querschnitt besitzt und einen Körper (4), zwei Seitenteile (5), ein Bauteil (10) aus einem Rotationskörper, der eine Achse (12) parallel zu dem Körper (4) festlegt und weiterhin zwei Eckverbindungteile (2a, b) umfaßt, dadurch gekennzeichnet, daß die beiden Eckverbindungsteile so angeordnet sind, daß sie eine drehende Bewegung um diese Achse sowohl in bezug auf das Bauteil (10) als auch in bezug zueinander ausführen können.

2. Eckverbindung (2) gemäß Anspruch 1, dadurch gekennzeichnet, daß die dem Bauteil (10) benachbarte freie Kante (9) des Körpers jedes Eckverbindungsteils (2a, b) in einer derartigen Art und Weise ausgebildet sein kann, daß sie, wenn das Eckverbindungsteil (2a, b) um die Schwenkachse (12) verschwenkt wird, eine Fläche beschreibt, welche der Außenfläche des Bauteils (10) entspricht und dieses dabei in einem vergleichsweise kleinem Abstand umgibt.

3. Eckverbindung (2) gemäß Anspruch 1 oder 2, dadurch gekennzeichnet, daß der Winkelbogen des Bauteils (10) gleich oder nur geringfügig größer als der maximale Winkel ist, den zwei Ebenen, welche die Achse (12) und die dem Bauteil (10) nächste freie Kante (9) des Körpers jedes Eckverbindungsteils (2a, b) umfassen, zueinander einnehmen können.

4. Eckverbindung (2) gemäß Anspruch 1, 2 oder 3, dadurch gekennzeichnet, daß an jeder der beiden seitlichen Kanten des Bauteils (10) mindestens ein Vorsprung (17) angeordnet ist, welcher sich radial nach außen über die Außenseite des Bauteils (10) erstreckt.

5. Eckverbindung (2) gemäß einem der Anspsrüche 1 bis 4, dadurch gekennzeichnet, daß die Seitenteile (5) der Eckteile (2a, b) jeweils zu zweit mittels Scharnieren (14a, b), von denen jedes zwei Scharnierflügel und einen Scharnierzapfen mit derselben Achse wie die Rotationskörper umfaßt, aneinander befestigt sind.

6. Eckverbindung (2) gemäß Anspruch 5, dadurch gekennzeichnet, daß jedes Scharnieteil (14a, b) einteilig mit dem entsprechenden Seitenteil (5) ausgebildet ist.

7. Eckverbindung (2) gemäß Anspruch 5, dadurch gekennzeichnet, daß jedes Scharnierteil (14a, b) ein eigenständiges Teil ist, welches auf der Innenseite des entsprechenden Seitenteils (5) befestigt ist und daß jeder Scharnierzapfen (15) auf einer Scheibe (11) koaxial befestigt ist, welche mindestens denselben Durchmesser wie der Rotationkörper an dessen entsprechendem Ende aufweist.

8. Eckverbindung (2) gemäß Anspruch 7, dadurch gekennzeichnet, daß koaxial zu der Scheibe (11) zusätzliche Einschnitte (13) in den Seitenteilen (5) angeordnet sind und daß die Außenseite der Scheiben (11) mit der Außenseite der Seitenteile (5) abschließen.

9. Eckverbindung (2) gemäß Anspruch 7 oder 8, dadurch gekennzeichnet, daß jede Scheibe (11) einen größeren Durchmesser als der Rotationskörper an seinem entsprechenden Ende aufweist und daß auf der Innenseite der Scheiben (11) koaxial eine ringförmige Nut (16) zur gleitenden Unterbringung eines der Enden des Bauteils (10) vorhanden ist.

10. Eckverbindung (2) nach Anspruch 9, dadurch gekennzeichnet daß in den Scharnierteilen (14a, b) Einschnitte (18) eingebracht sind, welche es dem Bauteil (10) ermöglichen, sich frei zwischen den ringförmigen Nuten (16) und der beiden Scheiben (11) in überwiegend allen Winkelpositionen zu erstrecken, welche die beiden Eckverbindungsteile (2a, b) in bezug zueinander einnehmen können.

11. Eckverbindung (2) nach einem der Ansprüche 1 bis 10, dadurch gekennzeichnet, daß die Achse (12) die Ebene jeder Seitenfläche (5) in einem Punkt zwischen dem die beiden Längskanten (8) der entsprechenden Seitenflächen (5) enthaltenden Linien schneidet.

## Revendications

1. Raccord d'angle (2) pour un chemin de câble qui a une section transversale généralement en forme de U et comprend un corps (4), deux ailes (5), un segment (10) d'un solide annulaire de révolution qui définit un axe (12) parallèle au corps (4) et également deux parties de raccord d'angle (2a, b), caractérisé en ce que les deux parties de raccord d'angle sont agencées pour un mouvement de pivotement autour dudit axe à la fois par rapport au segment (10) et l'une par rapport à l'autre.

2. Raccord d'angle (2) selon la revendication 1, caractérisé en ce que le bord libre (9), le plus proche du segment (10), du corps de chaque partie de raccord d'angle (2a, b) peut être formé de telle manière que lorsque la partie de raccord d'angle (2a, b) est oscillante autour de l'axe d'oscillation (12), il décrit une surface qui est similaire à l'extérieur du segment (10) et l'entoure à une distance relativement faible.

3. Raccord d'angle (2) selon la revendication 1 ou 2, caractérisé en ce que l'arc de l'angle du segment (10) est égal à ou seulement un petit plus grand que l'angle maximal que peuvent former l'un avec l'autre deux plans, contenant l'axe (12) et le bord libre (9), le plus proches du segment (10), du corps de chaque partie de raccord d'angle (2a, b).

4. Raccord d'angle (2) selon la revendication 1, 2 ou 3, caractérisé en ce que sur chacun des deux bords latéraux du segment (10), il est formé au moins une saillie (17) qui s'étend radialement depuis l'extérieur du segment (10).

5. Raccord d'angle (2) selon l'une quelconque des revendications 1 à 4, caractérisé en ce que les ailes (5) des parties d'angle (2a, b) sont articulées deux à deux ensemble avec des charnières (14a, b), chacune desquelles comprend deux raccords de charnière et un pivot de charnière avec le même axe que le solide de révolution.

6. Raccord d'angle (2) selon la revendication 5, caractérisé en ce que chaque partie de charnière (14a, b) est formée comme une partie intégrante de l'aile respective (5).

7. Raccord d'angle (2) selon la revendication 5, caractérisé en ce que chaque partie de charnière (14a, b) est une partie séparée qui est attachée à l'intérieur de l'aile respective (5), et en ce que chaque pivot de charnière (15) est monté coaxialement sur un disque (11) avec au moins le même diamètre que le solide de révolution a à son extrémité correspondante.

8. Raccord d'angle (2) selon la revendication 7, caractérisé en ce qu'il est formé, coaxialement au disque (11), des incisions complémentaires (13) dans les ailes (5), et en ce que l'extérieur des disques (11) affleure à l'extérieur des ailes (5).

9. Raccord d'angle (2) selon la revendication 7 ou 8, caractérisé en ce que chaque disque (11) a un diamètre plus grand que le solide de révolution a à son extrémité correspondante, et en ce qu'il est formé, coaxialement à l'intérieur des disques (11), une gorge annulaire (16) pour accommoder de manière glissante une des extrémités du segment (10).

10. Raccord d'angle (2) selon la revendication 9, caractérisé en ce que dans les parties de charnières (14a, b) il est formé des incisions (18) pour permettre au segment (10) de s'étendre librement dans les gorges annulaires (16) des deux disques (11) dans principalement toutes les positions angulaires dans lesquelles les deux parties de raccord d'angle (2a, b) peuvent être placées l'une par rapport à l'autre.

11. Raccord d'angle (2) selon l'une quelconque des revendications 1 à 10, caractérisé en ce que l'axe (12) coupe le plan de chaque aile (5) en un point entre des lignes contenant les deux bords longitudinaux (8) de l'aile respective (5).
